# EUROPÄISCHE PATENTSCHRIFT

(11) **EP 0 740 257 B1**
(45) Veröffentlichungstag und Bekanntmachung des Hinweises auf die Patenterteilung: **11.07.2001**
(21) Anmeldenummer: 95106446.8
(22) Anmeldetag: 28.04.1995
(51) Int. Cl.: G06F 17/25, H04M 3/22

(54) **Verfahren zum Konvertieren von betriebstechnischen Informationen in einer programmgesteuerten Kommunikationseinrichtung**
Method for converting operational information in a programmable communication system
Procédé pour convertir des informations industrielles dans un dispositif programmable de communication

(43) Veröffentlichungstag der Anmeldung: 30.10.1996
(73) Patentinhaber: SIEMENS AKTIENGESELLSCHAFT, 80333 München (DE)
(72) Erfinder: Vogt-Wingerath, Christine, D-14057 Berlin (DE); Brodersen, Helge, D-14057 Berlin (DE)

(56) Entgegenhaltungen:
- EP-A- 0 557 681
- DE-A- 3 402 454
- GB-A- 2 033 697
- PATENT ABSTRACTS OF JAPAN vol. 009 no. 197 (E-335) ,14.August 1985 & JP-A-60 064560 (FUJITSU KK) 13.April 1985,

## Beschreibung

Kommunikationseinrichtungen, insbesondere Kommunikationsvermittlungsanlagen, werden mit Hilfe von betriebstechnischen Informationen betrieben und administriert. Betriebstechnische Informtionen stellen folglich Einstell- und Steueranweisungen dar, durch die die Ressourcen der jeweiligen Kommunikationseinrichtung eingestellt sowie verwaltet und eine die vermittlungstechnischen und betriebstechnischen Daten verwaltende Datenbasis erstellt und verwaltet wird.

Die von einer Bedienperson eingegebenen oder einer vorbereiteten Stapeldatei übermittelten betriebstechnischen Anweisungen bzw. Informationen werden an einer Anzeigeeinrichtung bzw. einer Bildschirmeinrichtung einer Bedieneinrichtung der jeweiligen Kommunikationseinrichtung bzw. Kommunikationsanlage angezeigt. Hierbei wird jede betriebstechnische Anweisung bzw. Information durch einen sprachlichen Ausdruck in der Bildschirmeinrichtung visualisiert. Für die einzelnen betriebstechnischen oder administrativen Aufgaben, wie z.B. Teilnehmer einrichten oder löschen, sind Stapel von betriebstechnischen Anweisungen in Stapeldateien zusammengefaßt, die beim Erstellen eines akutellen Stapels sukzessive an die Bildschirmeinrichtung gesteuert und dort visualisiert werden. In die jeweiligen betriebstechnischen Anweisungen bzw. Informationen werden die aktuellen Parameter, z.B. Rufnummer, eingetragen und anschließend wird die jeweilige betriebstechnische Anweisung oder Information im Sinne einer Ausführung an die Kommunikationseinrichtung weitergeleitet oder in einen zur aktuellen Ausführung vorgesehenen Stapel von betriebstechnischen Anweisungen eingefügt. Die betriebstechnischen Anweisungen bzw. Informationen werden in Abhängigkeit der Sprachverständlichkeit der Bedienperson durch eine betriebstechnische Anweisung bzw. Information in entsprechender Sprache angezeigt. Hierzu weist die Bildschirmeinrichtung vorgegebene Bereiche auf, in denen insbesondere bei der Erstellung von aktuellen Stapeln von betriebstechnischen Anweisungen bzw. Informationen die einzelnen betriebstechnischen Anweisungen bzw. Informationen angezeigt werden. Zur Sprachanpassung werden die betriebstechnischen Anweisungen bzw. Informationen im Programm der Bildschirmeinrichtung durch einen Programmierer geändert. Dies erfordert einen erheblichen Zeitund Programmieraufwand.

Aus EP 0 514 305 A2 ist ein Verfahren zur kontextbezogenen Übersetzung von auf einer grafischen Benutzeroberfläche einer interaktiven Softwareanwendung dargestellten Textinformationen bekannt, bei dem zu übersetzende bzw. auszutauschende Textinformationen manuell ausgewählt und durch eine alternative sprachliche Ausdrucksform repräsentierende Textinformationen ersetzt werden. Im Bedarfsfall kann noch eine Anpassung der alternativen sprachlichen Ausdrucksform durch den Benutzer sowie eine Anpassung des Anzeigebereichs für die alternativen Textinformationen vorgenommen werden. Auf diese Weise ist eine sukzessive Ersetzung von Textinformationen einer grafischen Benutzeroberfläche einer interaktiven Softwareanwendung während des Ablaufs dieser Softwareanwendung durch eine alternative sprachliche Ausdrucksform repräsentierende Textinformationen möglich. Die Ersetzung der jeweiligen Textinformationen erfolgt jedoch nicht automatisch für die gesamte Benutzeroberfläche, sondern muß durch eine Bedienperson bzw. einen Übersetzer manuell vorgenommen werden.

Die der Erfindung zugrundeliegende Aufgabe ist darin zu sehen, den zur sprachlichen Anpassung erforderlichen Zeit- und Programmieraufwand zu reduzieren. Die Aufgabe wird ausgehend von einem Verfahren in einer Kommunikationseinrichtung gemäß den Merkmalen des Patentanspruches 1 durch dessen kennzeichnende Merkmale gelöst.

Erfindungsgemäß werden konvertierte betriebstechnische Anweisungen in eine Oberflächendatei kopiert und für jede sprachlich konvertierte betriebstechnische Anweisung wird die Größe des für eine Anzeige erforderlichen, vorgegebenen Bereiches in der Bildschirmeinrichtung (BE) festgestellt. Anschließend wird überprüft, ob der Bereich größer als der vorgegebene Bereich der Bildschirmeinrichtung ist, in dem die nicht konvertierte betriebstechnische Anweisung angezeigt ist.

Gemäß einer Weiterbildung der Erfindung wird in Abhängigkeit vom Überprüfungsergebnis die jeweilige sprachlich konvertierte betriebstechnische Anweisung an den vorgegebenen Bereich der Bildschirmeinrichtung übermittelt sowie angezeigt oder eine Bereichsübergröße der sprachlich konvertierten, betriebstechnischen Anweisung gemeldet - Anspruch 3. Nach einem Melden der Bereichsübergröße einer sprachlich konvertierten, betriebstechnischen Anweisung wird der vorgegebene Bereich der Bildschirmeinrichtung oder die sprachlich konvertierte, betriebstechnische Anweisung angepaßt - Anspruch 4. Durch das vorhergehend beschriebene Verfahren wird festgestellt, ob die jeweilige sprachlich konvertierte betriebstechnische Anweisung hinsichtlich ihres vorgegebenen Bereichs, d.h. im wesentlichen in ihrer Textlänge, größer ist, als der vorgegebene Bereich der Bildschirmeinrichtung, deren darin enthaltene betriebstechnische Anweisung sprachlich konvertiert wurde. Hierdurch wird ein Eintragen von sprachlich konvertierten betriebstechnischen Anweisungen in zu kleine vorgegebene Bereiche der Bildschirmeinrichtung und damit eine Zerstörung der Bedieneroberfläche in der Bildschirmeinrichtung vermieden. Die Eintragung einer zu großen, konvertierten betriebstechnischen Anweisung in den vorgegebenen Bereich wird vorteilhaft durch eine nachträgliche sprachliche oder Bereichsanpassung bewirkt.

Entsprechend einer vorteilhaften Ausgestaltung des erfindungsgemäßen Verfahrens wird mit Hilfe einer einmalig zu erstellenden Interpretationsroutine, einer Konvertierungsdatei, eines Betriebstechnik-Speichers und von eingegebenen Auswahlinformationen automatisch eine sprachliche Anpassung der angezeigten betriebstechnischen Anweisungen bzw. Informationen insbesondere von Stapeln von betriebstechnischen Anweisungen bzw. Informationen ermöglicht. Der erhebliche Zeit- und Programmieraufwand für die sprachliche Anpassung kann hierdurch vermieden werden. Ein weiterer Vorteil dieser Ausgestaltung ist darin zu sehen, daß durch eine einmalige Änderung, d.h. Ergänzung, Änderung oder Streichen, der im Betriebstechnik-Speicher gespeicherten betriebstechnischen Anweisungen bzw. Informationen eine beliebige Anpassung an unterschiedlichste betriebstechnische Anweisungen bzw. Informationen sowie deren sprachliche Formulierungen möglich ist. Mit Hilfe der genannten Ausgestaltung sind besonders vorteilhaft, d.h. einfach, bereits sprachlich angepaßte Stapel von betriebstechnischen Anweisungen bzw. Informationen zu verbessern bzw. zu überarbeiten, damit beispielsweise in einem Administrationsbereich betriebstechnische Anweisungen bzw. Informationen durch einheitliche sprachliche Formulierungen angezeigt werden und eine Irritation der Bedienpersonen vermieden wird.

Weitere vorteilhafte Ausgestaltungen des erfindungsgemäßen Verfahrens sind den weiteren Ansprüchen zu entnehmen.

Im folgenden wird das erfindungsgemäße Verfahren anhand zweier Blockschaltbilder näher erläutert. Dabei zeigen
FIG 1 eine Bedieneinrichtung einer Kommunikationseinrichtung und
FIG 2 eine Programm- und Speicherstruktur zur Realisierung des erfindungsgemäßen Verfahrens.

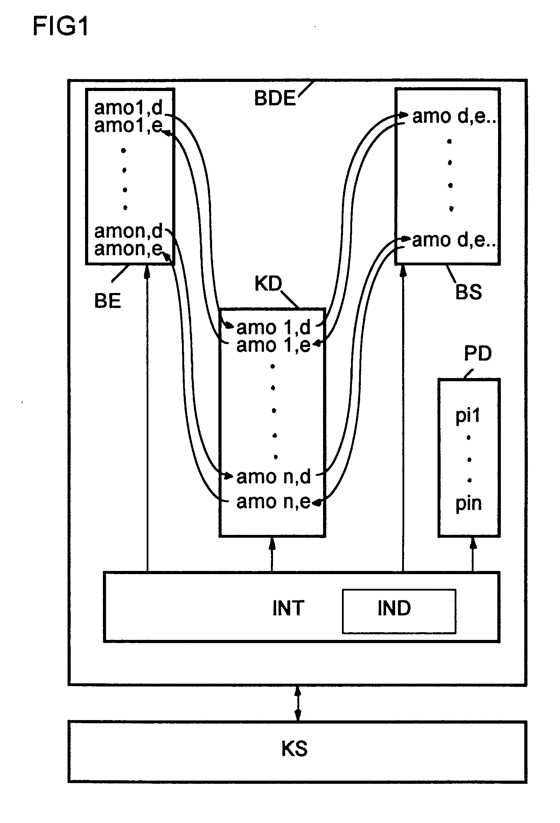

FIG 1 zeigt eine an eine Kommunikationseinrichtung angeschlossene Bedieneinrichtung BDE, die beispielsweise durch einen Personalcomputer oder ein anderes programmgesteuertes Terminal realisiert ist. Die Kommunikationseinrichtung stellt ein Kommunikationssystem KS dar und ist zur Vermittlung von angeschlossenen, nicht dargestellten Kommunikationsendgeräten vorgesehen. Das Kommunikationssystem wird mit Hilfe von betriebstechnischen Anweisungen bzw. Informationen amo1..n betrieben und administriert, d.h. verwaltet. Das Kommunikationssystem KS wird überwiegend durch bedieneraufgabenbezogene Stapel derartiger betriebstechnischer Anweisungen bzw. Informationen amol..n betrieben und verwaltet. Hierbei wird für eine Bedieneraufgabe, z.B. Teilnehmer Einrichten oder Löschen oder Datenbasis aktualisieren, ein Stapel von betriebstechnischen Anweisungen bzw. Informationen amol..n eingerichtet, der bei Bedarf, z.B. auf Initialisierung der Bedienperson sukzessive an eine Bildschirmeinrichtung BE übermittelt wird. In der Bildschirmeinrichtung BE werden die betriebstechnischen Anweisungen bzw. Informationen amo1..n in vorgegebenen Bereichen B1..n angezeigt bzw. visualisiert. Nach einem Eintragen von Parametern, wie z.B. Rufnummern, werden die betriebstechnischen Anweisungen bzw. Informationen amo1..n zu einem aktuellen Stapel zusammengefaßt und zur Ausführung der jeweiligen Bedieneraufgabe an das Kommunikationssystem KS übermittelt.

Zum Verständnis der jeweiligen Bedienperson werden die betriebstechnischen Anweisungen bzw. Informationen amo1..n entsprechend sprachlich angezeigt. Für das Ausführungsbeispiel sei angenommen, daß die betriebstechnischen Anweisungen bzw. Informationen amo1..n,d sprachlich deutsch angezeigt werden und mit Hilfe des erfindungsgemäßen Verfahren eine sprachliche Anpassung an englisch durchgeführt wird. Hierzu werden mit Hilfe einer Interpretationsroutine INT die jeweils in vorgegebenen Bereichen B1..n die sprachlich deutsch angezeigten betriebs-technischen Anweisungen bzw. Informationen amol..n,d in der Bildschirmeinrichtung sequentiell erfaßt und in eine Konvertierungsdatei KD eingetragen. Die Erfassung der vorgegebenen Bereiche B1..n erfolgt beispielsweise mit Hilfe einer Markierung, die durch die Interpretationsroutine INT erkannt und dieser anzeigen, daß es sich bei der in diesem vorgegebenen Bereich B1..n gespeicherten Information um eine betriebstechnische Anweisung bzw. Information amo1..n handelt. Die Markierung ist bei graphischen Betriebssystemen durch eine graphische Markierung oder durch eine alpha- und/oder numerische Markierung realisierbar. Zusätzlich werden die den jeweiligen vorgegebenen Bereich B1..n anzeigenden Positionsinformationen pi1..n sowie den Speicherbereich in der Konvertierungsdatei KD anzeigende Speicherbereichsinformationen (sb1..n) erfaßt und in eine Positionsdatei (PD) sequentiell eingetragen. Die Positionsinformationen pi1..n und Speicherbereichsinformationen sb1..n werden bei der Ansteuerung der Bildschirmeinrichtung BE und der Konvertierungsdatei KD erfaßt, wobei die Positionsinformationen pi1..n durch direkt die Bildschirmposition des vorgegebenen Bereichs B1..n anzeigende Informationen oder durch indirekt die Position in der Bildschirmeinrichtung BE anzeigende Textinformationen repräsentiert sind. Die Speicherbereichsinformationen sb1..n sind bekannterweise durch Speicheradressinformationen repräsentiert.

Desweiteren ist in der Bedieneinrichtung BDE ein Betriebstechnik-Speicher BS realisiert, in dem für jede bekannte betriebstechnische Anweisung bzw. Information amo d,e.. zumindest zwei sprachlich unterschiedliche betriebstechnische Anweisungen bzw. Informationen amo d,e.. gespeichert sind. Derartige Betriebstechnik-Speicher BS bzw. eine derartige Datenbank wird mit Hilfe von bekannten Datenbankprogrammen, z.B. "ACCESS" realisiert. Im Betriebstechnik-Speicher BS sind folglich alle sprachlich unterschiedlichen betriebstechnischen Anweisungen bzw. Informationen amo d,e.. gespeichert, durch die zumindest ein Kommunikationssystem, z.B. das Vermittlungssystem HICOM 300 der Fa. Siemens, betrieben und administriert wird. Hierbei ist jeder sprachlich unterschiedlichen betriebstechnischen Anweisung bzw. Information amo d,e.. eine Auswahlinformation d,e zugeordnet, durch die die sprachliche Formulierung, im Ausführungsbeispiel englisch und deutsch, bestimmt ist.

Die sprachliche Anpassung der betriebstechnischen Anweisungen bzw. Informationen amol..n wird durch eine Eingabe an der Bedieneroberfläche der Bedieneinrichtung initialisiert. Hierbei wird zusätzlich eine die gewünschte sprachliche Anpassung anzeigende Auswahlinformation d,e eingegeben. Bezogen auf das Ausführungsbeispiel ist dies beispielsweise die Auswahlinformation e, durch die eine sprachliche Anpassung der vorhandenen betriebstechnischen Anweisungen bzw. Informationen amo1..n an in deutsch in betriebstechnischen Anweisungen bzw. Informationen amo1..n in englisch eingeleitet wird. Mit Hilfe der Interpretationsroutine INT und der Positionsdatei PD wird die erste deutsch ausgedrückte betriebstechnische Anweisung bzw. Information amo1,d aus der Konvertierungsdatei KD gelesen und mit den im Betriebstechnik-Speicher BS gespeicherten betriebstechnischen Anweisungen bzw. Informationen amo d,e verglichen. Bei Übereinstimmung, d.h. nach Auffinden der entsprechenden sprachlich deutsch ausgedrückten, betriebstechnischen Anweisung bzw. Information amo,d wird aufgrund der eingegebenen Auswahlinformtion e die zugeordnete englisch ausgedrückte betriebstechnische Anweisung bzw. Information amo e ermittelt und in der Konvertierungsdatei KD die erste deutsch ausgedrückte durch die zugeordnete sprachlich englisch ausgedrückte betriebstechnische Anweisung bzw. Informationen amo1, ersetzt. Analog wird mit den in die Konvertierungsdatei KD eingetragenen verbleibenden betriebstechnischen Anweisungen bzw. Informationen amo2..n verfahren. Die konvertierten betriebstechnischen Anweisungen amo1..n,e können alternativ in einen weiteren Speicherbereich, beispielsweise eine zweite Spalte, der Konvertierungsdatei KD eingetragen werden, wobei vorteilhafterweise die ursprünglichen nicht konvertierten betriebstechnischen Anweisungen amol..n gespeichert bleiben. Dies kann für weitere Überprüfungen vorteilhaft sein.

Die Regeln für eine sprachliche Konvertierung der betriebstechnischen Anweisungen amo1..n,d sowie für deren sprachliche Erkennung, z.B. deutsch aufgrund der Auswahlinformation d, sind in einer in der Interpretationsroutine INT integrierten Interpretationsdatei IND definiert. Dort ist der Satz von betriebstechnischen Anweisungen amo definiert, der konvertiert werden kann bzw. soll. Desweiteren sind dort die Dateien des Betriebstechnik-Speicher BS angegeben, aus denen für die jeweilige sprachliche Konvertierung selektiert werden soll. Auf das Ausführungsbeispiel bezogen ist dies diejenige Datei im Betriebstechnik-Speicher BS, aus der die englisch konvertierten betriebstechnischen Anweisungen amo1..n,e entnommen werden.

Anschließend werden mit Hilfe der Interpretationsroutine INT und der in der Positionsdatei PD abgelegten Positions- und Speicherbereichsinformationen pi1..n, sb1..n die konvertierten betriebstechnischen Anweisungen bzw. Informationen amo1..n, e in die vorgegebenen Bereiche B1..n der Bildschirmeinrichtung BE eintragen und angezeigt.

Die derart konvertierten betriebstechnischen Anweisungen bzw. Informationen amo1..n, e werden anschließend zu einem eine Bedieneraufgabe realisierenden Stapel von betriebstechnischen Anweisungen bzw. Informationen amo1..n, e zusammengefaßt und für eine weitere Anwendung gespeichert. Die Interpretationsroutine INT sowie der Betriebstechnik-Speicher BS sind jeweils durch Programme realisiert und werden für die Konvertierung der betriebstechnischen Anweisungen bzw. Informationen amo in die Bedieneinrichtung BDE geladen. Alternativ sind die Programme in einer Service-Einrichtung, beispielsweise einem Service-Personalcomputer vorhanden und die Konvertierung der betriebstechnischen Anweisungen bzw. Informationen amo, insbesondere Stapel davon, wird in dieser Service-Einrichtung durchgeführt.

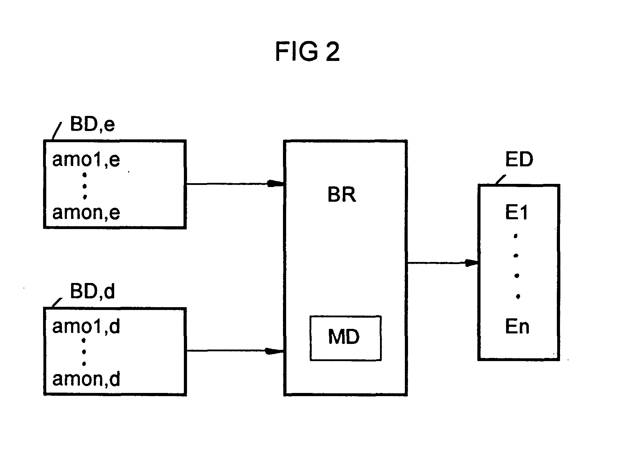

FIG 2 zeigt eine Bereichsdatei BD, in die die nicht konvertierten betriebstechnischen Anweisungen amo1..n kopiert sind, sowie zusätzlich eine weitere Bereichsdatei BD,e, in die die konvertierten, betriebstechnischen Anweisungen amo1..n,e kopiert sind. Das Kopieren der nicht konvertierten und konvertierten betriebstechnischen Anweisungen amo1..n,d,e jeweils aus der in FIG 1 dargestellten Konvertierungsdatei KD wird mit Hilfe einer Bereichsroutine BR bewerkstelligt. Bei einer Realisierung des erfindungsgemäßen Verfahren kann die in FIG 1 dargestellte Konvertierungsdatei KD durch die beiden in FIG 2 dargestellten Bereichsdateien BD ersetzt werden, wobei die Interpretationsroutine INT die sprachlich konvertierten betriebstechnischen Anweisungen amo1..n,e in die weitere Bereichsdatei BD,e sukzessive einträgt und eine Übermittlung der konvertierten betriebstechnischen Anweisungen amo1..n,e erst nach einer Überprüfung der Größe der vorgegebenen Bereiche B1..n erfolgt. Alternativ ist die Benutzung der Konvertierungsdatei KD mit beispielsweise zwei Spalten möglich.

Mit Hilfe der Bereichsroutine BR wird überprüft, ob der in der Bildschirmeinrichtung BE erforderlich Bereich B1'..n' der sprachlich konvertierten, betriebstechnischen Anweisung amo1..n,e größer oder kleiner ist, als der vorgegebene Bereich B1..n der Bildschirmeinrichtung BE, der für die nicht konvertierte, betriebstechnische Anweisung amo1..n vorgesehen ist. Bei der Überprüfung hinsichtlich Größe der vorgegebenen Bereiche B1..n, B1'..n' wird insbesondere die Textlänge überprüft und das Ergebnis E1..n in Textlänge 'kürzer bzw. gleich' oder 'zu lang' angegeben. Die Überprüfung wird durch Vergleich der Textlänge der gespeicherten, jeweiligen konvertierten und nicht konvertierten betriebstechnischen Anweisungen amo1..n, amo1'..n' bewirkt. Die Regeln zum Feststellen der Größe der vorgegebenen Bereiche B1..n, B1'..n', wie z.B. Textlänge oder Speicherbereichsinformationen sb1..n - siehe FIG 1-, sind in einer in der Bereichsroutine BR integrierten Methodendatei MD gespeichert. Dies sind auch Regeln, mit deren Hilfe aus den sprachlichen Formulierungen die erforderlichen Größen der Anzeigebereiche B1..n in der Bildschirmeinrichtung BE berechnet werden. Auch die möglichen oder im jeweiligen Anwendungsfall gewünschten Überprüfungsarten sind in die Methodendatei MD eingetragen. Die Ergebnisse E1..n der Überprüfungen werden in eine Ergebnisdatei ED eingetragen. Nach einer Bewertung der Ergebnisdatei ED wird bei einem Feststellen eines zu großen vorgegebenen Bereiches B1'..n' für eine sprachlich konvertierte betriebstechnische Anweisung amo1..n,e entweder die sprachlich konvertierte, betriebstechnische Anweisung amo1..n,e an den vorgegebenen Bereich B1..n angepaßt - z.B. durch eine Abkürzung - oder der vorgegebene Bereich B1..n in der Bildschirmeinrichtung BE vergrößert.

Durch das erfindungsgemäße Verfahren wird ein Eintragen von konvertierten betriebstechnischen Anweisungen amo1...n,e in zu kleine vorgegebene Bereiche B1...n der Bildschirmeinrichtung BE und damit eine Zerstörung einer Bedieneroberfläche, die beispielsweise für Stapel von betriebstechnischen Anweisungen amo1..n bestimmt ist, unterbunden, wodurch eine umfangreiche und zeitaufwendige Wiederherstellung der Bedieneroberfläche vermieden wird.

## Patentansprüche

1. Verfahren zum Überprüfen von konvertierten, an einer Bildschirmeinrichtung (BE) anzuzeigenden betriebstechnischen Informationen (amo1..n) einer programmgesteuerten Kommunikationseinrichtung, wobei die betriebstechnischen Informationen (amo1..n) im Rahmen einer betriebstechnischen Bearbeitung eines betriebstechnischen Programms an eine Bildschirmeinrichtung (BE) gesteuert und in vorgegebenen Bereichen (B1..n) der Bildschirmeinrichtung (BE) visualisiert und anschließend automatisch sprachlich konvertiert werden,
**dadurch gekennzeichnet**,
daß mit Hilfe einer Bereichsroutine (BR)
- die nicht konvertierten betriebstechnischen Anweisungen (amo1..n,d) in eine Bereichsdatei (BD,d) und die konvertierten betriebstechnischen Anweisungen (amo1..n,e) in eine weitere Bereichsdatei (BD,e) kopiert werden,
- daß auf der Basis dieser Bereichsdateien (BD,d; BD,e) für die sprachlich nicht konvertierten sowie für die konvertierten betriebstechnischen Anweisungen (amo1..n,d,e) die Größe des für eine Anzeige vorgegebenen sowie erforderlichen Bereiches (B1..n) in der Bildschirmeinrichtung (BE) festgestellt wird,
- daß jeweils überprüft wird, ob der festgestellte, erforderliche Bereich (B1'..n') der konvertierten betriebstechnischen Anweisung (amo1..n,e) größer als der vorgegebene Bereich (B1..n) der Bildschirmeinrichtung (BE) ist, in dem die nicht konvertierte betriebstechnische Anweisung (amo1..n,d) angezeigt ist,
- daß in Abhängigkeit vom Überprüfungsergebnis eine die jeweilige Übergröße oder Nicht-Übergröße anzeigende Ergebnisinformation (E1..n) gebildet und in eine Ergebnisdatei (ED) eingetragen wird.

2. Verfahren nach Anspruch 1, **dadurch gekennzeichnet,** daß nach einem Vorliegen einer die Bereichsübergröße einer sprachlich konvertierten, betriebstechnischen Anweisung (amol..n,e) anzeigenden Ergebnisinformation (E1..n) der vorgegebene Bereich (B1..n) der Bildschirmeinrichtung (BE) oder die sprachlich konvertierte, betriebstechnische Anweisung (amo1..n,e) angepaßt wird.

3. Verfahren nach einem der Ansprüche 1 oder 2, **dadurch gekennzeichnet**, daß nach einer Bereichsanpassung die sprachlich konvertierte betriebstechnische Anweisung (amo1..n,e) an den vorgegebenen Bereich (B1..n) der Bildschirmeinrichtung (BE) übermittelt sowie angezeigt werden.

4. Verfahren nach einem der Ansprüche 1 bis 3, **dadurch gekennzeichnet**, daß Regeln zum Feststellen des auf der Bildschirmeinrichtung (BE) erforderlichen Bereiches (B1..n, B1'..n') der konvertierten und nicht konvertierten betriebstechnischen Anweisungen (amo1..n,d,e) in einer in der Bereichsroutine (BR) integrierten Methodendatei (MD) definiert sind.

5. Verfahren nach Anspruch 4, **dadurch gekennzeichnet,** daß der vorgegebene Bereich (B1..n) der nicht konvertierten betriebstechnischen Anweisungen (amo1..n,d) und der erforderliche Bereich (B1'..n') der konvertierten betriebstechnischen Anweisungen (amo1..n,e) durch Überprüfen der Textlänge festgestellt wird.

6. Verfahren nach einem der Ansprüche 1 bis 5,
**dadurch gekennzeichnet,**
- mit Hilfe einer Interpretationsroutine (INT) die vorgegebenen Bereiche (B1..n) der Bildschirmeinrichtung (BE) sequentiell erfaßt werden, wobei bei einem Erfassen eines vorgegebenen Bereiches (B1..n)
-- die jeweils erfaßte betriebstechnische Information (amol..n) sequentiell in eine Konvertierungsdatei (KD) eingetragen
-- und eine die Position des vorgegebenen Bereiches auf der Bildschirmeinrichtung (BE) anzeigende Positionsinformationen (pi1..n) sowie ein den Speicherbereich in der Konvertierungsdatei (KD) anzeigende Speicherbereichsinformation (sb1..n) in einer Positionsdatei (PD) gespeichert werden,
- daß in einem Betriebstechnik-Speicher (DB) für jede betriebstechnische Information (amo) zumindest zwei sprachlich unterschiedliche, betriebstechnische Informationen (amo d,e..) einschließlich einer jeweils zugeordneten Auswahlinformation (d,e..) gespeichert sind,
- daß durch zumindest eine bedieneroberflächeneingegebene Auswahlinformation (d,e..) die Interpretationsroutine (INT) veranlaßt wird,
-- die in der Konvertierungsdatei (KD) gespeicherten betriebstechnischen Informationen (amo1..n) nacheinander mit den im Betriebstechnik-Speicher (DB) gespeicherten betriebstechnischen Informationen (amo) zu vergleichen und
-- bei Übereinstimmung die in der Konvertierungsdatei (KD) gespeicherte betriebstechnische Information (amo1..n) durch die die zumindest eine eingegebene Auswahlinformation (d,e..) aufweisende, im Betriebstechnik-Speicher (DB) gespeicherte betriebstechnische Information (amo d,e..) mit Hilfe der Positionsdatei (PD) zu ersetzen, und
- daß die ersetzten betriebstechnischen Informationen (amo1..n,e) entsprechend der gespeicherten Positionsinformationen (pi1..n) sukzessive an die vorgegebenen Bereiche (B1..n) der Bildschirmeinrichtung (BE) übermittelt werden.

7. Verfahren nach Anspruch 6, **dadurch gekennzeichnet,** daß der vorgegebene Bereich (B1..n) der Bildschirmeinrichtung (BE) durch einen graphischen Anzeigebereich eines graphischen Betriebssystems (WIN) realisiert ist.

8. Verfahren nach einem der Ansprüche 6 oder 7, **dadurch gekennzeichnet,** daß durch die Auswahlinformationen (d,e..) die Sprache der sprachlichen Konvertierung der betriebstechnischen Informationen (amo1..n) bestimmt ist.

9. Verfahren nach einem der Ansprüche 6 bis 8, **dadurch gekennzeichnet**, daß die Positionsinformationen (pi1..n) durch eine direkt den vorgegebenen Bereich (B1..n) in der Bildschirmeinrichtung anzeigende Positionsinformation oder durch eine indirekt den vorgegebenen Bereich (B1..n) anzeigende Textinformation eines angezeigten Textes repräsentiert ist.

10. Verfahren nach einem der Ansprüche 6 bis 9, **dadurch gekennzeichnet**, daß Regeln zum sprachlichen Erkennen und zur sprachlichen Konvertierung der betriebstechnischen Anweisungen (amo1..n,d) in einer Interpretationsdatei (IND) definiert sind.

## Claims

1. Method for checking converted operational information items (amo1..n), which are to be displayed on a screen device (BE), in a program-controlled communication device, where, within the context of operational processing of an operational program, the operational information items (amo1..n) are directed to a screen device (BE) and are displayed in prescribed areas (B1..n) of the screen device (BE) and then automatically converted in terms of language,
characterized
in that an area routine (BR) is used
- to copy the unconverted operational instructions (amo1..n,d) to an area file (BD,d), and to copy the converted operational instructions (amo1..n,e) to another area file (BD,e),
- in that, on the basis of these area files (BD,d; BD,e), the size of the area (B1..n) in the screen device (BE) which is prescribed and necessary for display is established for the operational instructions whose language has not been converted and for the converted operational instructions (amo1..n,d,e),
- in that a respective check is carried out to determine whether the established, necessary area (B1'..n') for the converted operational instruction (amo1..n,e) is larger than the prescribed area (B1..n) of the screen device (BE) in which the unconverted operational instruction (amo1..n,d) is displayed,
- in that, on the basis of the result of the check, result information (E1..n) indicating the respective oversize or absence of oversize is formed and is entered into a result file (ED).

2. Method according to Claim 1, characterized in that, once result information (E1..n) indicating the area oversize of an operational instruction (amo1..n,e) whose language has been converted is available, the prescribed area (B1..n) of the screen device (BE) or the operational instruction (amol..n,e) whose language has been converted is adjusted.

3. Method according to one of Claims 1 or 2, characterized in that, after an area has been adjusted, the operational instruction (amo1..n,e) whose language has been converted is transmitted to the prescribed area (B1..n) of the screen device (BE) and is displayed.

4. Method according to one of Claims 1 to 3, characterized in that rules for establishing the area (B1..n, B1'..n') required on the screen device (BE) for the converted and unconverted operational instructions (amo1..n,d,e) are defined in a method file (MD) which is integrated in the area routine (BR).

5. Method according to Claim 4, characterized in that the prescribed area (B1..n) for the unconverted operational instructions (amol..n,d) and the necessary area (B1'..n') for the converted operational instructions (amo1..n,e) are established by checking the text length.

6. Method according to one of Claims 1 to 5,
characterized
- in that an interpretation routine (INT) is used to detect the prescribed areas (B1..n) of the screen device (BE) sequentially, where, when a prescribed area (B1..n) is detected,
-- the respectively detected operational information item (amo1..n) is entered sequentially into a conversion file (KD),
-- and a position information item (pi1..n), indicating the position of the prescribed area on the screen device (BE), and a memory area information item (sb1..n), indicating the memory area in the conversion file (KD), are stored in a position file (PD),
- in that an operational memory (DB) stores, for each operational information item (amo), at least two operational information items (amo d,e..) whose languages are different, including a respectively associated selection information item (d,e..),
- in that at least one selection information item (d,e..) entered via a user interface prompts the interpretation routine (INT)
-- to compare the operational information items (amo1..n) stored in the conversion file (KD) successively with the operational information items (amo) stored in the operational memory (DB), and
-- if there is a match, to use the position file (PD) to replace the operational information item (amo1..n) stored in the conversion file (KD) with that operational information item (amo d,e..) stored in the operational memory (DB) which has the at least one entered selection information item (d,e..), and
- in that the replaced operational information items (amol..n,e) are transmitted to the prescribed areas (B1..n) of the screen device (BE) gradually on the basis of the stored position information items (pi1..n).

7. Method according to Claim 6, characterized in that the prescribed area (B1..n) of the screen device (BE) is provided by a graphical display area of a graphical operating system (WIN).

8. Method according to one of Claims 6 or 7, characterized in that the selection information items (d,e..) determine the language of the language conversion for the operational information items (amo1..n).

9. Method according to one of Claims 6 to 8, characterized in that the position information items (pi1..n) are represented by a position information item which directly indicates the prescribed area (B1..n) in the screen device, or by a displayed text's text information item which indirectly indicates the prescribed area (B1..n).

10. Method according to one of Claims 6 to 9, characterized in that rules for language recognition and language conversion for the operational instructions (amo1..n,d) are defined in an interpretation file (IND).

## Revendications

1. Procédé de vérification d'informations (amo1..n) converties de la technique d'exploitation, à afficher sur un dispositif (BE) d'écran, d'un dispositif de communication commandé par programme, les informations (amo1..n) de la technique d'exploitation étant envoyées, dans le cadre d'un traitement de la technique d'exploitation d'un programme de la technique d'exploitation, à un dispositif (BE) d'écran et visualisées dans des zones (B1..n) prescrites du dispositif (BE) d'écran et ensuite converties automatiquement du point de vue linguistique,
caractérisé
en ce que, à l'aide d'une routine (BR) de zone,
- les instructions (amo1..n,d) non converties de la technique d'exploitation sont copiées dans un fichier (BD,d) de zone et les instructions (amo1..n,e) converties de la technique d'exploitation sont copiées dans un fichier (BD,e) supplémentaire,
- en ce que, sur la base de ces fichiers (BD,d ; Bd,e) de zone, pour les instructions (amo1..n,d,e) de la technique d'exploitation non converties et converties linguistiquement, la dimension de la zone (B1..n) dans le dispositif (BE) d'écran prescrite et nécessaire pour un affichage est déterminée,
en ce qu'il est vérifié chaque fois si la zone (B1'..n') nécessaire constatée de l'instruction (amo1..n,e) convertie de la technique d'exploitation est plus grande que la zone (B1..n) prescrite du dispositif (BE) d'écran dans laquelle l'instruction (amo1..n,d) non convertie de la technique d'exploitation est affichée,
- en ce que, en fonction du résultat de la vérification, une information (E1..n) de résultat indiquant la surdimension ou la non surdimension associée est formée et portée dans un fichier (ED) de résultat.

2. Procédé suivant la revendication 1, caractérisé en ce que, suivant une présence d'une information (E1..n) de résultat indiquant la surdimension de zone d'une instruction (amo1..n,e) convertie linguistiquement de la technique d'exploitation, la zone (B1..n) prescrite du dispositif (BE) d'écran ou l'instruction (amo1..n,e) convertie linguistiquement de la technique d'exploitation est adaptée.

3. Procédé suivant l'une des revendications 1 ou 2, caractérisé en ce que, après une adaptation de zone, l'instruction (amo1..n,e) convertie linguistiquement de la technique d'exploitation est transmise à la zone (B1..n) prescrite du dispositif (BE) d'écran et est affichée.

4. Procédé suivant l'une des revendications 1 à 3, caractérisé en ce que des règles pour déterminer la zone (B1..n, B1'..n'), nécessaire sur le dispositif (BE) d'écran, des instructions (amo1..n,d,e) converties et non converties de la technique d'exploitation sont définies dans un fichier (MD) de procédé intégré à la routine (BR) de zone.

5. Procédé suivant la revendication 4, caractérisé en ce que la zone (BE..n) prescrite des instructions (amo1..n,d) non converties de la technique d'exploitation et la zone (B1'..n') nécessaire des instructions (amo1..n,e) converties de la technique d'exploitation est déterminée par vérification de la longueur de texte.

6. Procédé suivant l'une des revendications 1 à 5,
caractérisé en ce que
- il est détecté séquentiellement à l'aide d'une routine (INT) d'interprétation les zones (B1..n) prescrites du dispositif (BE) d'écran; lors d'une détection d'une zone (B1..n) prescrite du dispositif (BE) d'écran ; lors d'une détection d'une zone (B1..n) prescrite
-- l'information (amo1..n) détectée de la technique d'exploitation étant portée séquentiellement dans un fichier (KD) de conversion
-- et une information (pi1..n) de position indiquant la position de la zone prescrite sur le dispositif (BE) d'écran ainsi qu'une information (sb1..n) de zone de mémoire indiquant la zone de mémoire dans le fichier (KD) de conversion étant mémorisées dans un fichier (PD) de position,
- en ce qu'il est mémorisé dans une mémoire (DB) de la technique d'exploitation, pour chaque information (amo) de la technique d'exploitation, au moins deux informations (amo d,e..) linguistiquement différentes de la technique d'exploitation, y compris une information (d,e..) associée,
- en ce que la routine (INT) d'interprétation est initiée par au moins une information (d,e..) de sélection entrée sur l'interface d'utilisateur,
-- les informations (amo1..n) de la technique d'information mémorisées dans le fichier (KD) de conversion étant à comparer les unes après les autres aux informations (amo) de la technique d'exploitation mémorisée dans la mémoire (DB) de la technique d'exploitation
et
-- en cas de coïncidence, l'information (amo1..n) de la technique d'exploitation mémorisée dans le fichier (KD) de conversion étant à remplacer, à l'aide du fichier (PD) de position, par l'information (amo d,e..) de la technique d'exploitation, mémorisée dans la mémoire (DB) de la technique d'exploitation, comportant la au moins une information (d,e..) de sélection entrée,
et
- en ce que les informations (amo1..n,e) remplacées de la technique d'exploitation sont transmises en fonction des informations (pi1..n) de position mémorisées en succession aux zones (B1..n) prescrites du dispositif (BE) d'écran.

7. Procédé suivant la revendication 6, caractérisé en ce que la zone (B1..n) prescrite du dispositif (BE) d'écran est réalisée par une zone d'affichage graphique d'un système (WIN) graphique d'exploitation.

8. Procédé suivant l'une des revendications 6 ou 7, caractérisé en ce qu'il est déterminé par les informations (d,e..) de sélection la langue de la conversion linguistique des informations (amo1..n) de la technique d'exploitation.

9. Procédé suivant l'une des revendications 6 à 8, caractérisé en ce que les informations (pi1..n) de position sont représentées par une information de position indiquant directement la zone (B1..n) prescrite dans le dispositif d'écran ou par une information textuelle d'un texte affiché indiquant indirectement la zone (B1..n) prescrite.

10. Procédé suivant l'une des revendications 6 à 9, caractérisé en ce que des règles pour la reconnaissance linguistique et pour la conversion linguistique des instructions (amo1..n,d) de la technique d'exploitation sont définies dans un fichier (IND) d'interprétation.
